Europäisches Patentamt

European Patent Office

Office européen des brevets

(11) Publication number: **0 161 496**
**B1**

# EUROPEAN PATENT SPECIFICATION

(45) Date of publication of patent specification: **02.08.89**

(51) Int. Cl.⁴: **G 11 B 5/09**

(21) Application number: **85104458.6**

(22) Date of filing: **12.04.85**

(54) Digital magnetic recording circuit.

(30) Priority: **13.04.84 JP 74306/84**

(43) Date of publication of application:
**21.11.85 Bulletin 85/47**

(45) Publication of the grant of the patent:
**02.08.89 Bulletin 89/31**

(84) Designated Contracting States:
**DE FR GB NL**

(56) References cited:
**EP-A-0 012 264**
**AT-B- 373 415**
**DE-A-3 237 789**
**DE-A-3 304 796**
**GB-A-2 080 997**

(73) Proprietor: **VICTOR COMPANY OF JAPAN, LIMITED**
**12, 3-chome, Moriya-Cho Kanagawa-ku**
**Yokohama-Shi Kanagawa-Ken 221 (JP)**

(72) Inventor: **Moriyama, Masaru**
**No. 6, Asamiso 3877-14, Fukami**
**Yamato-shi Kanagawa-ken (JP)**

(74) Representative: **Patentanwälte Grünecker, Dr. Kinkeldey, Dr. Stockmair, Dr. Schumann, Jakob, Dr. Bezold, Meister, Hilgers, Dr. Meyer-Plath**
**Maximilianstrasse 58**
**D-8000 München 22 (DE)**

Courier Press, Leamington Spa, England.

## Description

### Background of the invention

The present invention relates to a digital magnetic recording circuit and, more particularly, to a digital magnetic recording circuit for use with a pulse code modulation recording and playback apparatus as set forth in the preamble of claim 1. Such circuit is known from EP—A—0 012 264.

Thanks to the progress in electronic technologies, apparatuses capable of recording and reproducing information signals with high quality and fidelity have recently been introduced to the market. Among such advanced apparatuses, a pulse code modulation (PCM) recording and playback apparatus is constructed to convert audio and other analog signals to digital ones so as to record and reproduce the digital signals into and out of a suitable recording medium, e.g. magnetic recording medium. PCM recording and playback apparatuses may generally be classified into two types by the recording and playback system, i.e., one which uses stationary heads and the other which uses rotary heads.

As to the stationary head type system, assuming that audio signals are transmitted over two transmission channels, with sixteen transmission bits per channel and at a sampling frequency of 44.1 kiloherts or above, the total transmission rate of the audio signals is as high as 2 megabits per second (MBPS) or above. The primary requisite for stable recording and playback is, therefore, providing a plurality of tracks and designing the transmission rate per track adequately low. It follows that the stationary head type system needs to perform recording and playback relying on a plurality of tracks, i.e. multi-track recording and playback. Meanwhile, the multi-track recording and playback may be accomplished by means of conventional winding type record heads. However, considering the great number of tracks and, therefore, interconnections between the record heads and various circuits such as signal processing circuits and drive circuits as well as productivity of magnetic heads, it is more desirable to record information by the use of an integrated multi-track record head, a plurality of heads integrated by means of thin films or the like.

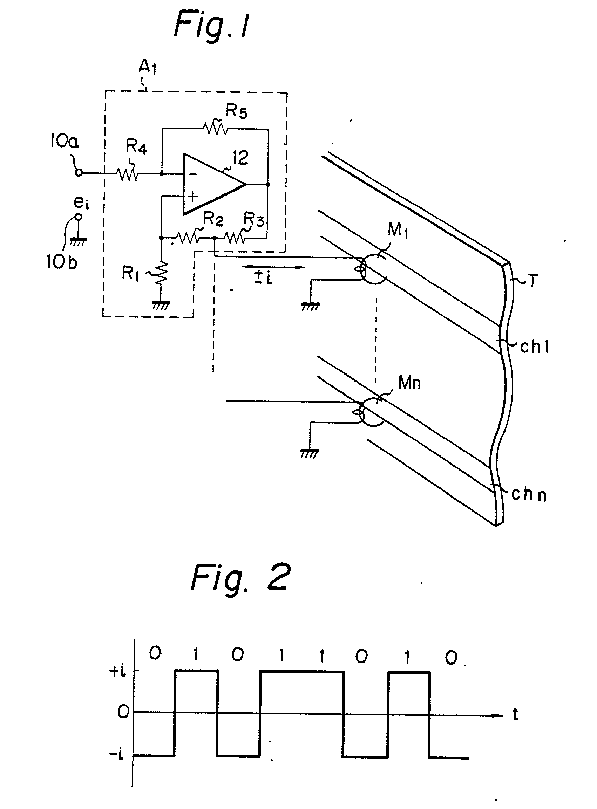

Referring to Fig. 1 of the drawings, a prior art multi-track record head is shown together with a magnetic tape T. Multi-tracks $ch_1$—$ch_n$ (only $ch_1$ and $ch_n$ are shown) are formed in the magnetic tape T in $n$ data channels. A record signal input terminal 10a is interconnected to a record amplifier circuit $A_1$, while a record signal input terminal 10b is connected to ground. As mentioned earlier, in order to record information into the tape T in an $n$-data channel multi-track mode, there has to be installed $n$ record amplifier circuits $A_1$ in total each having the construction shown in Fig. 1, i.e. record amplifier circuits $A_1$—$A_n$ (only $A_1$ is shown). As shown, each of the record amplifier circuits $A_1$—$A_n$ comprises an operational ampli-

fier (OP AMP) 12 and resistors $R_1$—$R_5$ and serves as a known drive circuit well known in the art. The multi-track record head comprises record heads $M_1$—$M_n$ (only $M_1$ and $M_n$ are shown) which are connected at one end to their associated record amplifier circuits $A_1$—$A_n$ and at the other end to ground.

In the construction shown in Fig. 1, digital signals, or data, are recorded as flux reversals in the tape T by applying positive and negative signal voltages to the record signal input terminals 10a and 10b, respectively. Specifically, the heads $M_1$—$M_n$ are individually applied with positive and negative constant currents $i$ such as shown in Fig. 2 from their associated record amplifier circuits $A_1$—$A_n$, the constant current applied to the record head $M_1$, for example, being expressed as:

$$i = -e \, (R_2 + R_3)/(R_3 \cdot R_4)$$

where $e$ is the voltage applied to the record amplifier circuit $A_1$, $R_1$—$R_4$ are the resistance values of the resistors included in the circuit $A_1$, and $R_1$ is equal to $R_4$.

In Fig. 2 illustrating an exemplary waveform of current applied to each record head, the abscissa represents time $t$ and the ordinate, current $i$. The current $i$ increases upwardly along the ordinate and decreases downwardly along the same. ZEROs and ONEs shown above the waveform are indicative of the kinds of digital signals to be recorded into the tape T.

Supposing the use of winding type record heads as the record heads $M_1$—$M_n$ in recording digital data in terms of flux reversals, the individual heads provide inductive loads and such is usually coped with by installing differential amplifiers or constant current circuits which can sufficiently drive their associated heads $M_1$—$M_n$. This is to increase the minimum flux reversal pulse width in saturation recording. In Fig. 1, each of the record amplifier circuits $A_1$—An is a constant current circuit producing constant positive and negative current, generally referred to as a bilateral circuit.

The problem with the prior art recording circuit shown in Fig. 1 is that each record amplifier circuit, $A_1$—$A_n$, requires two separate power source circuits to be supplied with positive and negative source voltages and, in addition, the same number of large current output OP AMPs as the data channels are indispensable. Hence, the number of record amplifiers $A_1$—$A_n$ increases with that of data channels. This undesirably adds to the total circuitry scale and, thereby, increases power consumption and costs while obstructing the trend to a small-size lightweight construction.

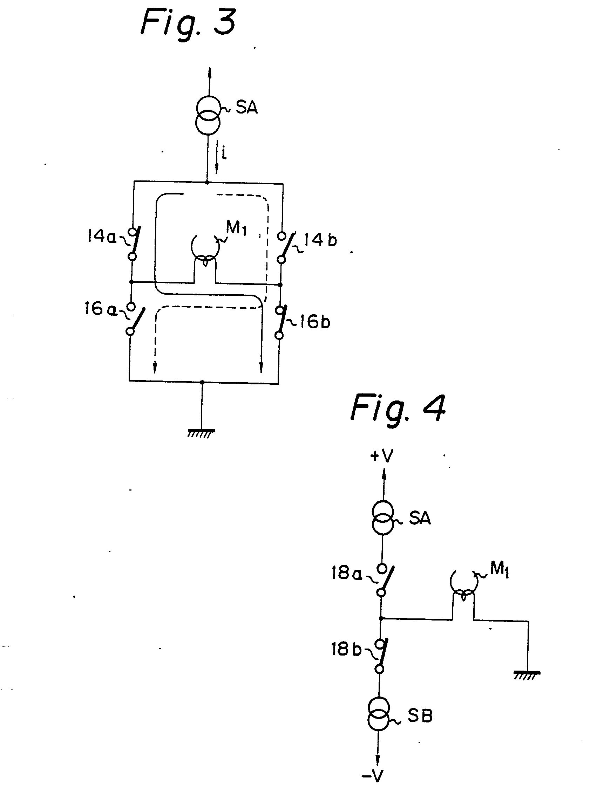

In light of the above, it has been customary to use such drive circuits as those shown in Figs. 3 and 4 for driving a record head. Fig. 3 shows a drive circuit of the type using a balanced transformerless (BTL) circuit and a constant current source in combination such drive circuit is shown in aforementioned EP—A—0 012 264, Fig.

4, on the other hand, shows a drive circuit implemented by positive and negative current sources in a complementary symmetry circuit. The drive circuit in any of Figs. 3 and 4 is associated with the data channel $ch_1$ only by way of example.

In Fig. 3, the same structural elements as those shown in Fig. 1 are designated by like reference numerals and will not be described any further for simplicity. The drive circuit in Fig. 3 comprises a constant current source SA and semiconductor switching elements 14a, 14b, 16a and 16b which may comprise, for example, metal oxide semiconductor (MOS) transistors or bipolar transistors. The switching elements 14a and 16a behave in a reciprocal manner and so do the switching elements 14b and 16b. That is, while the switching element 14a is conductive, the switching element 14b is nonconductive, the switching element 16a is nonconductive, and the switching element 16b is conductive (the condition illustrated in Fig. 3). So controlling the states of the switching elements 14a, 14b, 16a and 16b causes a forward current and a reverse current to selectively flow through the magnetic head $M_1$, enabling data to be recorded as flux reversals in the tape T.

In the drive circuit of Fig. 4, the same structural elements as those shown in Fig. 3 are designated by like reference numerals and detailed description thereof will be omitted. The drive circuit comprises a positive constant current source SA, a negative constant current source SB, and semiconductor switching elements 18a and 18b which may comprise MOS transistors or bipolar transistors, for example. The switching elements 18a and 18b operate reciprocal to each other, that is, while the former is conductive, the latter remains nonconductive (the condition shown in Fig. 4). By controlling the states of the switching elements 18a and 18b in the described manner, it is possible to conduct forward and reverse currents selectively through the head $M_1$, allowing flux reversals to be recorded in the tape T.

As described above, the drive circuits shown in Figs. 3 and 4 share the same recording principles, i.e. switching the direction of current flowing through a head by means of a switching element of the kind mentioned. The problem is, however, that resistance is constantly preserved in a switching element because an ideal switching element whose resistance in a conductive state is zero ohm is impractical. Due to such resistance, switching elements used to control the currents for driving the head brings about power losses. This problem is particularly serious in the drive circuit of Fig. 3 in which four switching elements are required to drive a single record head and two of them are constantly introduced into the current path leading to the record head, further promoting the power loss. In a multi-track head configuration, the number of switching elements and, therefore, the circuit scale would become prohibitive as well as the costs and power loss.

Meanwhile, thin-film magnetic heads enhances the ease of production of multi-track thin-film heads because they are implemented by pattern mask technologies extensively used in the integrated circuit fabrication art and others. Yet, considering the interconnections of the heads to drive circuits and the number of bonding steps involved in the production, that is, the productivity of thin-film magnetic heads, it is desirable that thin-film heads be commonly interconnected by a pattern mask as far as possible. In this respect, the drive circuit of Fig. 3 cannot have its two terminals commonly connected in providing a multi-track head configuration, except at the cost of a greater number of wiring steps.

The drive circuit of Fig. 4 is smaller than that of Fig. 3 in the number of switching elements per data channel as well as in the number of switching elements disposed in the current path to the record head, successfully cutting down the power loss. However, the current source should preferably comprise a constant current source implemented by an electronic circuit and, in a multi-track head configuration with the drive circuit of Fig. 4, the constant current source needs be associated with each record head. This, coupled with the fact that two separate current sources are necessary per data channel, would boost the circuitry scale to a critical extent in a multi-track configuration.

Furthermore, a constant current source or a constant voltage source is often constructed to attain a desired constant current or voltage characteristic by applying surplus power during light load operations to a control transistor or the like as power losses. Then, the source capacity of a drive circuit inclusive of such power losses becomes much greater than the power which is expected to be consumed by the record head and switching elements. A constant current or voltage source of the above-described nature is contradictory to the growing demand for a small-size, lightweight and cost-effective construction, particularly in the home-use equipment market. For example, a dc power source circuit made up simply of a small-capacity power source transformer, a rectifier and an electrolytic capacitor is used in many applications. Where such a dc power source circuit is used and if its power source capacity is small, an increase in load results in a significant drop of voltage which in turn makes it difficult to supply a predetermined current to the record head.

Summary of the invention

It is therefore the object of the present invention to provide a digital magnetic recording circuit which applies a constant current to a record head with no regard to input digital data, reduces the number of required switching elements per track and, thereby, allows a minimum of power loss due to switching elements to occur and reduces the number of necessary wiring steps and makes it needless to provide a current or voltage source for each track, thereby achieving a small-size, lightweight and inexpensive construction.

This object is attained by the characterizing features of claim 1. Preferred embodiments of the invention are subject matter of the dependent claims.

In accordance with the present invention, a digital magnetic recording circuit for a recording and playback apparatus which records input digital signals into a plurality of tracks formed in a recording medium is disclosed. The circuit changes the potential at a common junction of record heads in response to input digital data. A single control circuit suffices to apply a constant current to each record head with no regard to input digital data. The number of switching elements per track is reduced to in turn reduce power losses attributable to switching elements.

The present invention will become apparent from the following detailed description taken with the accompanying drawings.

Brief description of the drawings

Fig. 1 shows an example of digital magnetic recording using a prior art multi-track record head;

Fig. 2 shows a waveform of current which may be applied to the record head;

Fig. 3 is a circuit diagram of a drive circuit which comprises a BTL circuit and a constant current source in combination;

Fig. 4 is a circuit diagram of another drive circuit using positive and negative constant current sources of a complementary symmetry circuit;

Fig. 5 is a view of a thin-film magnetic record head;

Fig. 6 shows an equivalent circuit the thin-film magnetic record head;

Fig. 7 is a block diagram showing a basic construction of a drive circuit applicable to a preferred embodiment of the digital magnetic recording circuit of the present invention;

Fig. 8 is a diagram showing a digital magnetic recording circuit embodying the present invention;

Figs. 9A—9M show signal waveforms for describing the operation of the recording circuit shown in Fig. 8;

Fig. 10 is a block diagram showing specific examples of a variable voltage drive circuit and a voltage programmer in accordance with the embodiment shown in Fig. 8;

Fig. 11 is a block diagram showing another specific example of the variable voltage drive circuit and voltage programmer;

Fig. 12 is a circuit diagram showing specific examples of a switching element group and a drive circuit associated therewith in accordance with the embodiment of the present invention;

Fig. 13 is a circuit diagram showing alternative examples of the switching element group and drive circuit associated therewith;

Fig. 14 shows a compensation circuit connected between the variable voltage drive circuit and a record head group;

Fig. 15 shows a waveform of current which may be applied to the record head group;

Fig. 16A shows a waveform representative of operation of a prior art digital magnetic recording circuit whose current capacity is insufficient; and

Fig. 16B shows a waveform representative of operation of the digital magnetic recording circuit of the present invention.

Description of the preferred embodiments

While the digital magnetic recording circuit of the present invention is susceptible of numerous physical embodiments, depending upon the environment and requirements of use, substantial numbers of the herein shown and described embodiments have been made, tested and used, and all have performed in an eminently satisfactory manner.

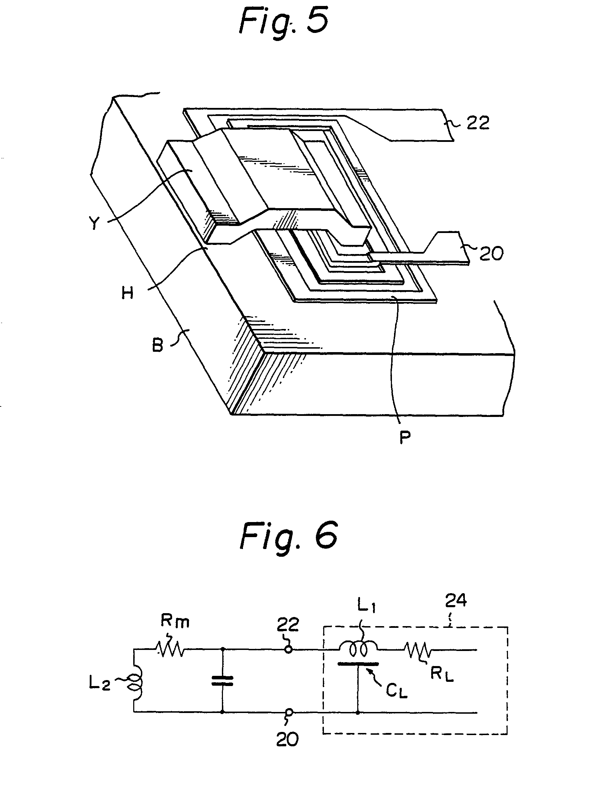

Reference will first be made to Fig. 5 for describing the general construction of a thin-film magnetic record head. As shown in Fig. 5, the thin-film magnetic record head comprises terminals 20 and 22 for electrical connection, a coil pattern P, a yoke Y, and a ferrite base B. An air gap H is defined between the yoke Y and the ferrite base B.

The head shown in Fig. 5, which is fabricated by mask pattern technology, vacuum deposition technology and the like, readily provides a record head having about sixteen or seventeen tracks to several tens of tracks, compared to a conventional winding (bulk) type record head which has winding around a core, and even a multi-track record head whose track pitches are on the order of several tens of microns. However, since the available number of turns of the winding is smaller in the thin-film head than in the bulk type head, the former cannot serve the recording application unless the recording current is boosted. While the number of turns may be increased in order to suppress the recording current, the number of turns available with a thin-film record head is not more than several, several tens of turns are impracticable without resorting to microtechniques such as pattern bridging which are detrimental to productivity.

As described above, a thin-film magnetic head facilitates the production of a multi-track head with any desired track pitches, but the number of turns attainable therewith is small. Fig. 6 shows an equivalent circuit of a thin-film head of the above-mentioned nature. The equivalent circuit includes the terminals 20 and 22 shown in Fig. 5, a lead 24 for electrical connection, a coil inductance $L_1$ of the lead 24, an inductance $L_2$ of the head, a conductor resistance Rm of the head, a capacitance Cm of the head, a conductor resistance RL of the lead 24, and a capacitance CL of the lead 24.

In the equivalent circuit of Fig. 6, the coil inductance $L_1$, capacitance CL and conductor resistance RL of the lead 24 grow to unnegligible degrees, while the inductance $L_2$ of the head is not so great. In many cases, therefore, the value of the conductor resistance Rm of the head constitutes a major load as viewed from the drive circuit side. That is, while the conventional bulk type head provides an inductive load, the thin-head magnetic head constitutes an inductive load rather close to a conductor resistance load. What this implies is that a drive circuit for operating a thin-film magnetic head needs only be construct provide a predetermined large current.

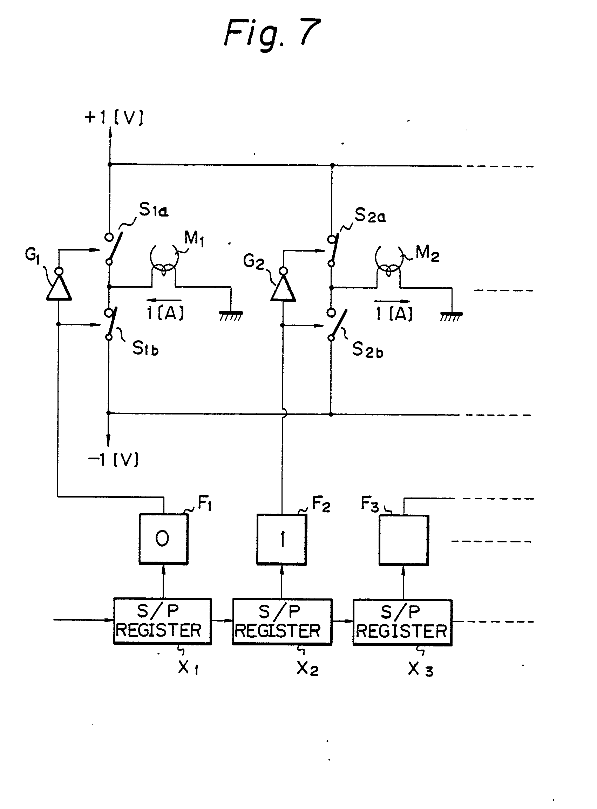

With the above in mind, a reference will be made to Fig. 7 for describing a drive circuit which operates a record head by applying a predetermined current thereto driven by a voltage source. Specifically, Fig. 7 is a block diagram showing a basic construction of a drive circuit applicable to one embodiment of the present invention.

In Fig. 7, there are shown multi-track record heads $M_1$, $M_2$ ... which are implemented by thin-film magnetic heads. The heads $M_1$, $M_2$ ... are commonly interconnected at one end thereof and supplied with a predetermined potential (grounded in Fig. 7 for simplicity). The other end of the head $M_1$ is connected to a junction of switching elements $S_{1a}$ and $S_{1b}$, that of the head $M_2$ to a junction of switching elements $S_{2a}$ and $S_{2b}$, and so on. All such switching elements comprise commonly connected MOS transistors or the like. A positive voltage, +1 volt for example, is applied across the switching elements $S_{1a}$, $S_{2a}$ ..., and a negative voltage, −1 volt for example, across the switching elements $S_{1b}$, $S_{2b}$ .... The switching elements $S_{1a}$, $S_{1b}$, $S_{2a}$, $S_{2b}$ and so on are connected in serial pairs which are associated in one-to-one correspondence with the tracks. The switching elements $S_{1a}$, $S_{2a}$ ... respectively are controlled by output signals of flip-flops $F_1$, $F_2$ and so on by way of inverters $G_1$, $G_2$ .... The other switching elements $S_{1b}$, $S_{2b}$ ... are controlled directly by the output signals of the flip-flops $F_1$, $F_2$ ..., respectively. In this construction, the switching elements $S_{1a}$ and $S_{1b}$ behave in a reciprocal fashion; while the switching elements $S_{1a}$ is conductive, the switching element $S_{1b}$ remains nonconductive and, while the former is nonconductive, the latter remains conductive.

Specifically, the construction is such that while the flip-flop $F_1$ produces a (logical) ZERO and the flip-flop $F_2$ a ONE, the switching element $S_{1a}$ is held nonconductive, the switching element $S_{1b}$ conductive, the switching element $S_{2a}$ conductive, and the switching element $S_{2b}$ nonconductive. The same principle of reciprocal actions applies to the other switching elements.

Assume that each of the switching elements exerts resistance of 1 ohm when turned on, and that as mentioned earlier a voltage of +1 volt is applied across each switching element $S_{1a}$, $S_{2a}$, ..., and a voltage of −1 volt across each switching element $S_{1b}$, $S_{2b}$ .... Then, in the drive circuit shown in Fig. 7, a current of 1 ampere flows through the head $M_1$ as indicated by a leftwardly headed arrow, that is, from the ground toward the switching element $S_{1b}$, while a current of 1 ampere flows through the head $M_2$ as indicated by a rightwardly headed arrow, that is, from the switching element $S_{2a}$ toward ground.

Let it be assumed that ten bits of serial digital data to be recorded are applied to a serial-to-parallel (S/P) register $X_1$, and that the digital data to be latched by the flip-flop circuit, whatever its bit pattern may be, include five ONEs such as in a bit pattern "0 1 1 0 1 0 1 0 0 1". Then, since the total number of tracks in this case is ten, a current of 1 ampere can be applied to each record head whose resistance is 1 ohm only if the positive and negative power source capacities are each 5 watts (i.e. 10 watts in total, 5 on the positive side and 5 on the negative side). In this condition, ground potential suffices for the common junction of the record heads. However, the situation is different when it comes to, for example, a stream of ten data bits including seven ONEs such as "1 0 1 1 1 0 1 1 1 0". Since the number of tracks is ten as mentioned above such a seven-ZERO pattern requires the positive power source capacity to be 7 watts and the negative one to be 3 watts (that is, where the total capacity is 10 watts, 7 on the positive side and 3 on the negative side, a voltage on the positive side needs be 7 volts and one on the negative side 3 volts in order that a recording current of 1 ampere may be applied to each record head).

It will be understood from the above that a predetermined current can be applied to the record heads if the positive and negative power source capacities are made variable in response to a bit pattern of incoming digital data. However, as previously discussed, it is undesirable to install two separate power source circuits which are individually variable to match themselves to a bit pattern of incoming serial digital data.

Meanwhile, considering the absolute value, 10 watts, of the supplied power source capacities is constant, the supply of 7-watt power to the switching elements $S_{1a}$, $S_{2a}$ ... and the supply of 3-watt power to the other switching elements $S_{1b}$, $S_{2b}$ ... may be implemented if the switching elements $S_{1a}$, $S_{2a}$ ... and the switching elements $S_{1b}$, $S_{2b}$ are commonly supplied with the same power source voltage, and the junction of the record heads, which is grounded in Fig. 7, is kept at a negative potential instead of the illustrated ground potential. Such will control the proportion of the positive and negative power delivery and, thereby, ensure the supply of a substantially constant desired current to the record heads. Specifically, if the power source voltage is fixed at ±5 volts instead of +7 volts or −3 volts, and the junction of the record heads is held at −2 volts instead of the ground potential, a constant current will be allowed to flow through the record heads. Hence, by installing a variable voltage drive circuit capable of varying the potential at the common junction of the record heads in response to incoming digital data, it becomes possible to realize a drive circuit which constantly feeds a predetermined current to the record heads with the help of a single control circuit, and reduces the number of necessary wirings as well as the number of driving (switching) elements per record head.

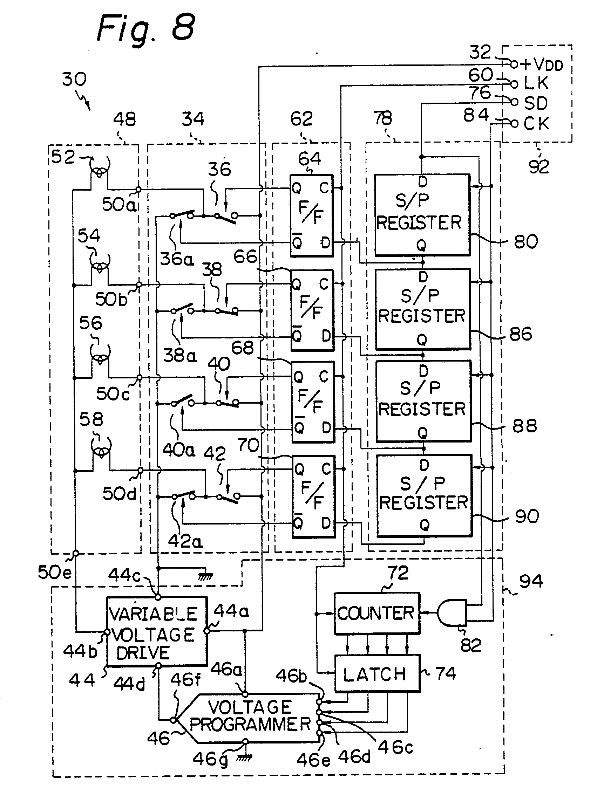

Referring now to Fig. 8, a digital magnetic recording circuit embodying the present invention is shown and generally designated by the reference numeral 30. The recording circuit in this particular embodiment is assumed to use a four-track recording head by way of example.

A terminal 32, to which a positive power source voltage +VDD is applied from the outside, is led to one end of switching elements 36, 38, 40 and 42 which constitute a switching element group 34, a source input terminal 44a of a variable voltage drive circuit 44, and a source input terminal 46a of a voltage programmer 46. The switching elements 36, 38, 40 and 42 respectively are connected at the other end to one end of switching elements 36a, 38a, 40a and 42a and, via terminals 50a, 50b, 50c and 50d of a record head group 48, to one end of record heads 52, 54, 56 and 58. The other end of each record head 52, 54, 56 or 58 is connected to an output terminal 44b of the variable voltage drive circuit 44 via a terminal 50e. The other end of each switching element 36a, 38a, 40a or 42a and a terminal 44c of the drive circuit 44 are connected to ground.

A terminal 60, to which a latch clock signal LK is applied, is connected to clock input terminals C of D flip-flops (D F/F) 64, 66, 68 and 70 which constitute a flop-flop (F/F) group 62, a reset terminal of a counter 72, and a clock input terminal of a latch circuit 74. Output terminals Q of the D F/Fs 64, 66, 68 and 70 respectively are led to control terminals of the switching elements 36, 38, 40 and 42, and output terminals $\bar{Q}$ to control terminals of the switching elements 36a, 38a, 40a and 42a.

A terminal 76, to which serial digital data SD are applied, is connected to a serial data input terminal D of a serial-to-parallel (S/P) register 80 which is included in a register group 78. The terminal 76 is also connected to one input terminal of a two-input AND gate 82, which will produce a ONE only when supplied with ONEs at the same time.

Further, a terminal 84 where a clock pulse signal CK arrives is connected to transfer clock input terminals of S/P registers 86, 88 and 90 in the register group 78 as well as that of the S/P register 80, and to the other input terminal of the AND gate 82. The output terminal of the AND gate 82 is connected to a clock input terminal of the counter 72. Parallel output terminals of the counter 72 are commonly connected to data input terminals of the latch 74. Data output terminals of the latch 74 in turn are connected to data input terminals 46b, 46c, 46d and 46e of the voltage programmer 46. An output terminal 46f of the voltage programmer 46 is connected to a control terminal 44d of the variable voltage drive circuit 44, while a terminal 46g of the voltage programmer 46 is connected to ground.

A parallel output terminal Q of the S/P register 80 is connected to a data input terminal D of the D F/F 64 as well as to a serial input terminal D of the S/P register 86. A parallel output terminal Q of the S/P register 86 is connected to a data input terminal D of the D F/F 66 as well as to a serial input terminal D of the S/P register 88. A parallel output terminal Q of the S/P register 88 is connected to a data input terminal D of the D F/F 68 and to a serial input terminal D of the S/P register 90. Further, a parallel input terminal Q of the S/P register 90 is connected to a data input terminal D of the D F/F 70.

All the switching elements 36, 38, 40, 42, 36a, 38a, 40a and 42a comprise electronic switches such as MOS transistors and are controlled by signals which are applied thereto from the F/F group 62 by way of a level shifter and other interfaces, which are not shown in Fig. 8 and will be described later. Specifically, they are controlled such that the switching elements 36, 38, 40 and 42 and the switching elements 36a, 38a, 40a and 42a respectively are turned on by TTL level ONEs output from the output terminals Q and $\bar{Q}$ of the D F/Fs 64, 66, 68 and 70, and turned off by ZEROs. The terminals 32, 60, 76 and 84 constitute an input terminal group 92. The variable voltage drive circuit 44, voltage programmer 46, counter 72, latch 74, and AND gate 82 constitute a common drive circuit (control drive circuit) 94 which is physically separate from the switching element group 34, record head group 48, FF group 62, register group 78, and input terminal group 92 and is externally located.

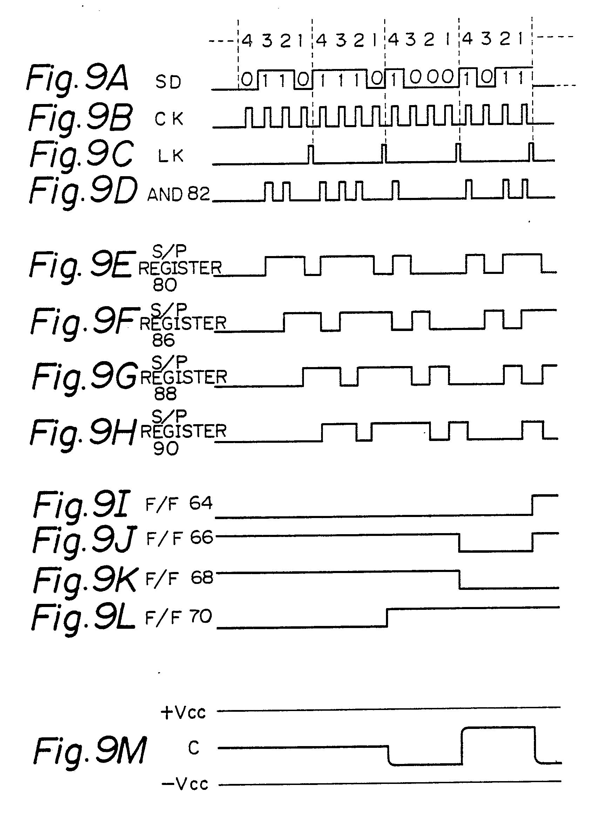

In operation, four-track serial digital data SD are applied to the terminal 76 as shown in Fig. 9A by way of example. The digital data shown in Fig. 9A serially arrive in the order of the fourth track, the third track, the second track and the first track as indicated by numerals 4, 3, 2 and 1 above the waveform. The digital data SD are routed to the serial input terminal D of the S/P register 80.

Applied to the terminal 84 is a clock pulse signal CK as shown in Fig. 9B. The clock pulse signal CK is fed to the transfer clock input terminals of the S/P registers 80, 86, 88 and 90. At each positive going edge of the signal CK, the S/P registers 80, 86, 88 and 90 sequentially transfer the serial digital data, which are applied to their serial data input terminals D, serially from their parallel output terminals Q. That is, the serial digital data SD come in through the terminal 76 are sequentially transferred from the parallel output terminals of the S/P registers 80, 86, 88 and 90 as shown in Figs. 9E—9H.

The latch clock signal LK arrived at the terminal 60 may have a waveform as shown in Fig. 9C. The signal LK is routed to the clock input terminals C of the D F/Fs 64, 66, 68 and 70. The data signals shown in Figs. 9E—9H respectively are applied to the data input terminals D of the D F/Fs 64, 66, 68 and 70. As a result, at each positive going edge of the latch clock signal LK, the D F/Fs 64, 66, 68 and 70 produce respectively the data signals shown in Figs. 9E—9H as data signals shown in Figs. 9I—9L from their output terminals $\bar{Q}$. Appearing at the output terminals Q of the D F/Fs 64, 66, 68 and 70 are inverted versions of such data signals as those shown in Figs. 9I—9L. The switching elements 36, 38, 40 and 42 and the switching elements 36a, 38a, 40a and 42a individually become conductive when their associated D F/Fs in the F/F group 62 produces ONEs and nonconductive if otherwise.

By controlling the states of the switching elements 36, 38, 40, 42, 36a, 38a, 40a and 42a in response to incoming serial digital data as discussed above, forward and reverse currents are allowed to selectively flow through the record heads 52, 54, 56 and 58, so that the serial digital data SD can be recorded into a magnetic tape as flux transitions.

The AND gate 82 provides AND of the serial digital data SD shown in Fig. 9A and the clock pulse signal CK shown in Fig. 9B, the AND being shown in Fig. 9D. The output of the AND gate 82 is routed to the clock input terminal of the counter 72 which then counts the input pulses. The output of the counter 72 is fed from the parallel output terminals of the counter to the data input terminals 46b, 46c, 46d and 46e of the voltage programmer 46 via the latch 74. In response to an output signal of the latch 74 (count from the counter 72), the voltage programmer 46 generates a control signal which will cause the variable voltage drive circuit 44 to apply voltages $c$ as shown in Fig. 9M to the record head group 48.

In the above condition, voltages such as shown in Fig. 9M are applied to the terminal 50e of the record head group 48, that is, the voltage applied to the terminal 50e of the record head group 48 is variable complementarily to the serial digital data SD such that a substantially constant current flows through each record head 52, 54, 56 or 58 in the group 48, whatever the input serial digital data may be. This eliminates the need for constant current sources otherwise required in one-to-one correspondence with the record heads, and allows only two switching elements to suffice each head in controlling the forward or reverse current. Further, where the record head group 48 is fabricated using thin films or the like, the commonly connected portions of the record heads can be wired by pattern mask techniques in the production line and, hence, the number of terminal wiring steps is reduced to (n+1) in the case of an n-track integrated magnetic head, which is a remarkable improvement over the prior art multi-track head configurations.

In accordance with the embodiment shown and described, the potential at the common junction of the record head group 48 is varied in response to an input serial data signal by counting only ONEs of AND of a serial data signal applied to the terminal 76 and a clock pulse signal applied to the terminal 84, thereby constantly supplying the record head group 48 with a predetermined current. Yet, the construction would become simpler if the input data signals were applied in parallel. Specifically, parallel data signals would permit the use of even analog demodulators such as a pulse counting detector.

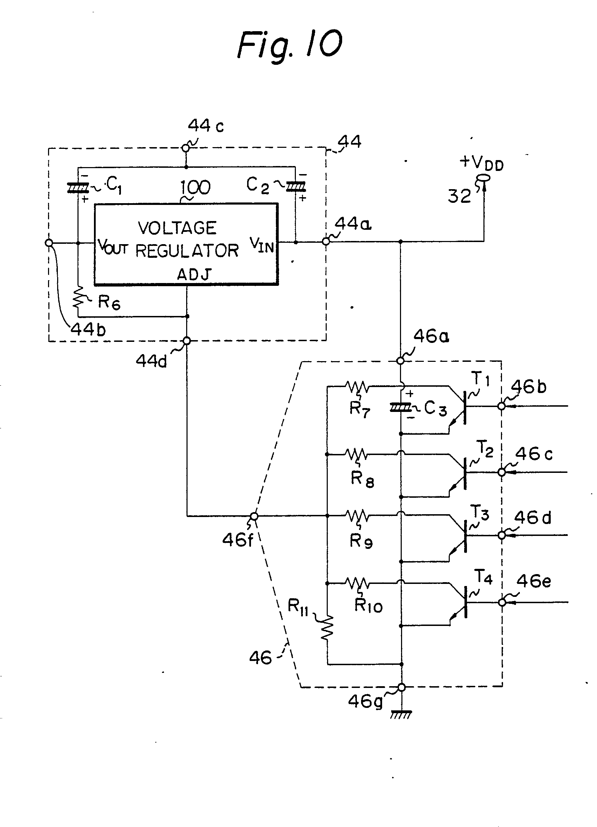

Referring to Fig. 10, a specific example of the variable voltage drive circuit 44 and that of the voltage programmer 46 included in the recording circuit 30 of Fig. 8 are shown. In Fig. 10, the same structural elements as those shown in Fig. 8 are designated by like reference numerals and will not be described in detail for simplicity.

In Fig. 10, the terminal 32 is connected to the source input terminal 44a of the variable voltage drive circuit 44 and to the source input terminal 46a of the voltage programmer 46. The data input terminals 46b, 46c, 46d and 46e respectively are connected to bases of the transistors $T_1$, $T_2$, $T_3$ and $T_4$. The source input terminal 46a is connected via a capacitor $C_3$ to emitters of the transistors $T_1$, $T_2$, $T_3$ and $T_4$ as well as to the terminal 46g. Collectors of the transistors $T_1$, $T_2$, $T_3$ and $T_4$ are connected to the output terminal 46f via resistors $R_7$, $R_8$, $R_9$ and $R_{10}$, respectively. The output terminal 46f is connected to the terminal 46g via a resistor $R_{11}$.

The output terminal 46f of the voltage programmer 46 is connected to the control terminal 44d of the drive circuit 44. The control terminal 44d in turn is connected to an adjust (ADJ) terminal of the variable voltage regulator 100 and, via a resistor $R_6$, to the output terminal 44b and an output terminal of the voltage regulator 100. The output terminal of the voltage regulator 100 is connected to the terminal 44c via a capacitor $C_1$. The source input terminal 44a is connected to an input terminal of the voltage regulator 100 and, via a capacitor $C_2$, to the terminal 44c.

The voltage programmer 46 serves as a resistor switching circuit and is constructed such that the resistance between the source input terminal 46a and the output terminal 46f is variable depending data signals applied to the data input terminals 46b, 46c, 46d and 46e. The variable voltage regulator 100, on the other hand, functions to vary the resistance between the source input terminal 46a and output terminal 46f of the voltage programmer 46, thereby varying the output voltage. In this construction, a power source voltage complementary to data signals applied to the data input terminals 46b, 46c, and 46e appear at the output terminal of the drive circuit 44.

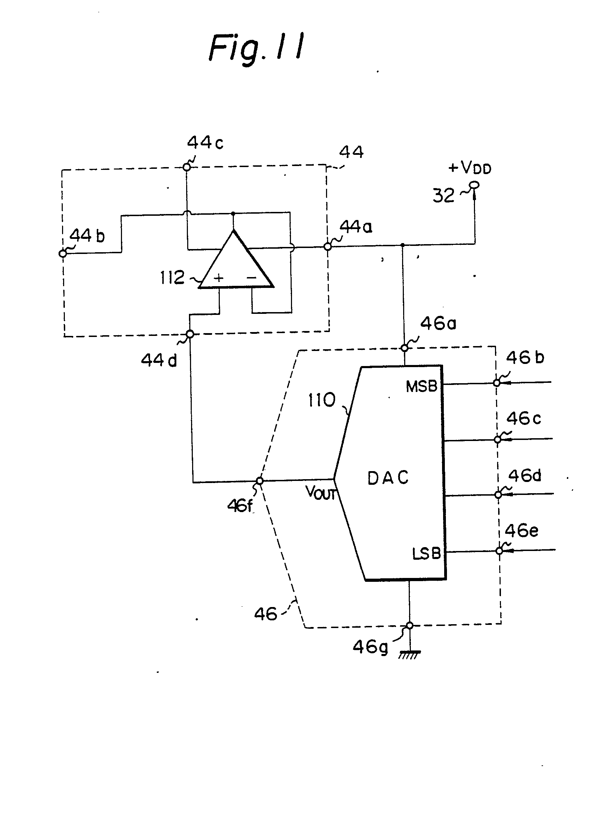

Referring to Fig. 11, alternative constructions of the variable voltage drive circuit 44 and voltage programmer 46 are shown. In Fig. 11, the same structural elements as those shown in Fig. 8 are designated by like reference numerals. The terminal 32 is connected to the source input terminal 44a of the variable voltage drive circuit 44 and to the source input terminal 46a of the voltage programmer 46. The data input terminals 46b, 46c, 46d and 46e of the voltage programmer 46 are each connected to an input terminal of a digital-to-analog converter (DAC) 110, while the source input terminal 46a is connected to the DAC 110. The terminal 46g is connected to the DAC 110. The output terminal of the DAC 110 is connected to the output terminal 46f of the voltage programmer 46. The output terminal 46f of the voltage programmer 11 is connected to the control terminal 44d of the drive circuit 44. The control terminal 44d is connected to a non-inverting input terminal of an OP AMP 112. The output terminal of the OP AMP 112 is connected to output terminal 44b of the drive circuit 44 as well as to an inverting input terminal of the OP AMP 112. Both the source input terminal 44a and terminal 44c are connected to the OP AMP 112.

The voltage programmer 46 transforms digital data signals applied to its data input terminals 46b, 46c, 46d and 46e to analog data signals. The output voltage of the voltage programmer 46 is routed through the output terminal 46f and the control terminal 44d of the drive circuit 44 to the non-inverting input of the OP AMP 112, with the result that a source voltage corresponding to the data applied to the data input terminals 46b, 46c, 46d and 46e appears at the output terminal of the drive circuit 44.

It will be noted that in the particular embodiment shown in Fig. 8 the recording circuit 30 needs a high-speed power source circuit capable of supplying a large current for each transmission bit and, also, a power source circuit and an operational amplifier the settling times of which sufficiently match with the required high-speed operations. It has been confirmed that the adjustable voltage drive circuit 44 and voltage programmer 46 provide desirable effects if implemented by discrete high-power power operational amplifiers or high-speed digital-to-analog converters.

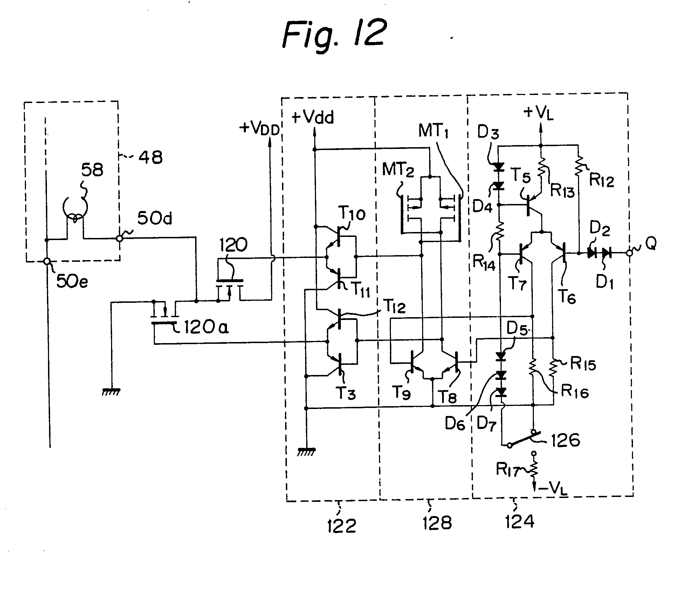

Referring to Fig. 12, there are shown specific examples of the switching element group and drive circuit associated therewith which are included in the recording circuit of Fig. 8. The construction shown in Fig. 12 focuses on switching elements 120 and 120a of the switching element group 48 by way of example. In Fig. 12, the same structural elements as those shown in Fig. 8 are designated by like reference numerals and detailed description thereof will be omitted for simplicity.

In the specific example shown in Fig. 12, the switching elements 120 and 120a which serve as the switching elements 42 and 42a of Fig. 8 comprise N-channel MOS transistors which are operated by a single power source. A power source voltage (+VDD) is applied to the drain of the switching element, or transistor, 120. The source of the transistor 120 is connected to the drain of the other switching element, or transistor, 120a, the junction of the two transistors 120 and 120a being connected to one end of the record head 58. The source of the transistor 120a is connected to ground. In this construction, the source voltages applied to the gates of the transistors 120 and 120a need only be opposite in phase to each other and satisfy the following relation between the source voltage (+VDD) applied to the drain of the transistor 120 and a source voltage (+Vdd) applied to a complementary follower 122, which will be described:

$$+Vdd > VDD$$

A level detector 124 is connected to the parallel output terminal Q of the S/P register 90 shown in Fig. 8, at which output signals appear with TTL levels (+5 volts and 0 volt). The level detector 124 functions to detect those of the output signals which are lower than, for example, 1.4 volts as ZEROs and those higher than, for example, 2.4 volts as ONEs. As shown in Fig. 12, the level detector 124 may comprise transistors $T_5$, $T_6$ and $T_7$, diodes $D_1$—$D_7$, resistors $R_{12}$—$R_{17}$, and a switch 126.

Signals detected by the level detector 124 are transferred to a level shifter 128 which, as shown in Fig. 12, is made up of MOS transistors $MT_1$ and $MT_2$, and transistors $T_8$ and $T_9$. The level shifter 126 is adapted to convert the signal level, ONEs (or ZEROs), applied thereto from the level detector 124 (for example, converting a +VL/2 to +Vdd where VL=+5 volts). The output of the level shifter 126 is fed to the complementary follower 122.

The function assigned to the complementary follower 122 is applying voltages of opposite phases to the gates of the transistors 120 and 120a, which are MOS transistors as mentioned earlier. Specifically, the complementary follower 122 serves to apply ground potential (source voltage +Vdd) in response to a ONE inputted to the level detector 124. As shown in Fig. 12, the complementary follower 122 comprises transistors $T_{10}$, $T_{11}$, $T_{12}$ and $T_{13}$. The junction of the emitter of the transistor $T_{10}$ and that of the transistor $T_{11}$ is connected to the gate of the transistor 120, while the junction of the emitter of the transistor $T_{12}$ and that of the transistor $T_{13}$ is connected to the gate of the transistor 120a.

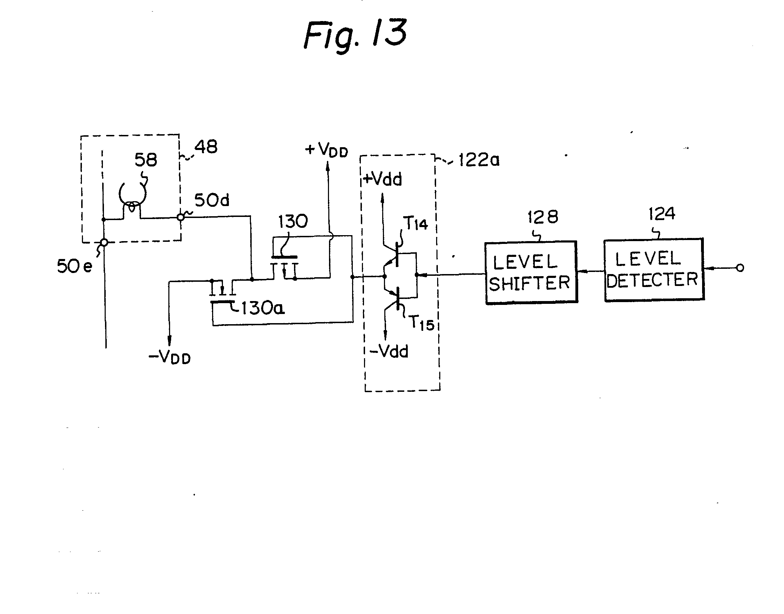

In an alternative arrangement wherein the terminal 50e of the record head group is driven by positive and negative source voltages, the switching element group 34 and its associated drive circuit may be designed as shown in Fig. 13. In Fig. 13, the illustration focuses to switching elements 130 and 130a of a switching element group, and the same structural elements as those shown in Fig. 12 are designated by like reference numerals.

In the particular example of Fig. 3, the switching elements 42 and 42a shown in Fig. 8 are implemented by N-channel MOS transistors 130 and 130a by way of example. The drain of the transistor 130 is connected to the drain of the transistor 130a, while their junction is connected to one end of the record head 58. A source voltage +VDD is applied to the source of the transistor 130, and a source voltage −VDD to the source of the transistor 130a. That is, the objective will be achieved if a source voltage +Vdd or (−Vdd) is applied to the gates of the transistors 130 and 130a under a condition:

$$+Vdd > +VDD$$

The level detector 124 and level shifter 128 shown in Fig. 13 are identical with those shown in Fig. 12 and, therefore, description thereof will be omitted.

Further, in the drive circuit shown in Fig. 13, the gates of the transistors 130 and 130a are commonly connected. The complementary follower 122a, therefore, needs only to control the commonly connected gates of the transistors 130 and 130a, accomplishing a simpler construction than the complementary follower 122 of Fig. 12. Such leads to simplification of the overall arrangement of the drive circuit associated with the switching element group 48.

In the case where the recording circuit 30 in the illustrative embodiment is designed for application to recording high-speed signals, the variable voltage drive circuit 44 will sequentially set and output a predetermined voltage for each bit period of sequentially transmitted digital data. Stated another way, it will serve as a constant voltage circuit having a low impedance characteristic.

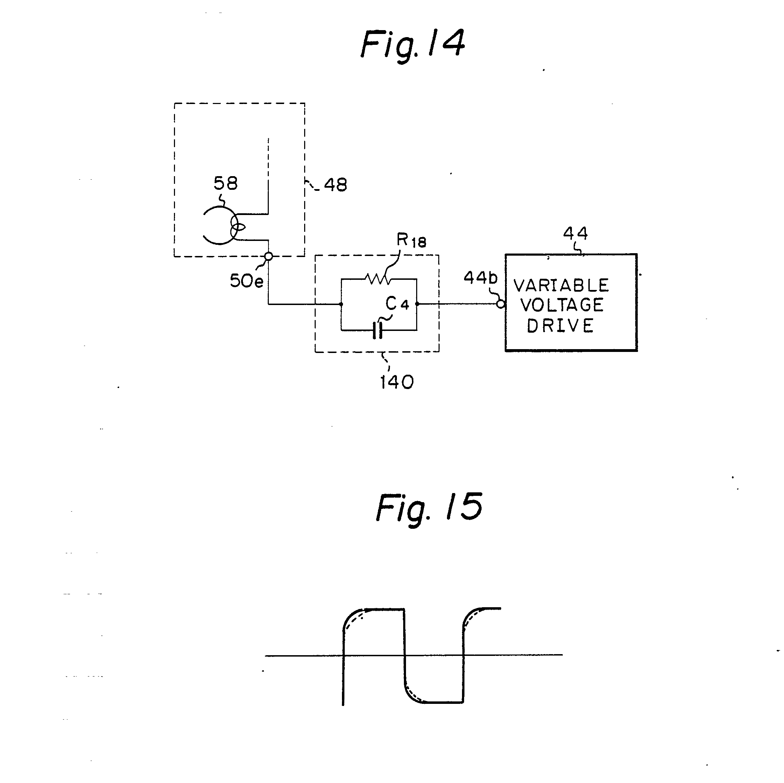

As already discussed, the record head group 48 is constructed by the use of thin films or the like so that, as viewed from the drive circuit 44 side, it exhibits a characteristic more resembling a resistive load than to an inductive load. Such record head group 48 has a pattern inductance which is apt to make the load obstruct the flow of high frequency components to the record head group 48. To overcome this problematic situation, as shown in Fig. 14, a parallel connection of a resistor $R_{18}$ and a capacitor $C_4$ may be connected between the output terminal of the drive circuit 44 and the terminal 50e of the record head group 48 to serve as a compensation circuit 140. The implementation shown in Fig. 14 is effective to cause a current to flow in a more constant stable manner through the record head group 48, as indicated by a solid curve in Fig. 15.

Specifically, in Fig. 15, a current flows through the record head group 48 along a solid curve if the compensation circuit 140 of Fig. 14 is installed, and along a dotted curve if otherwise.

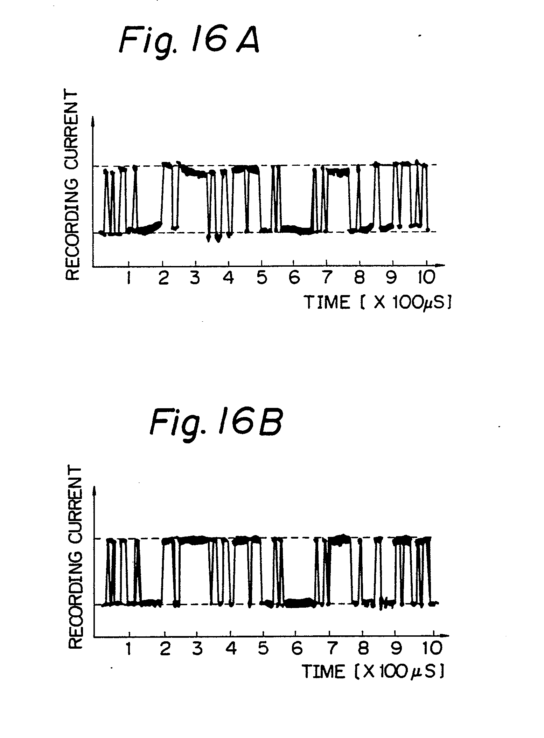

Waveforms shown in Figs. 16A and 16B demonstrate respectively the operation of the prior art recording circuit whose current capacity is insufficient and the operation of the recording circuit 30 in accordance with the present invention. In Figs. 16A and 16B, the abscissa shows time base and the ordinate, recording current. As shown in Fig. 16B, the recording circuit 30 in the illustrative embodiment is successful in supplying record heads with substantially constant recording currents.

In summary, it will be seen that the present invention provides a digital magnetic recording circuit which applies constant current to recording heads with no regard to incoming digital data, reduces the number of required switching elements per track and, thereby, power losses attributable to switching elements, cuts down the number of wiring steps, and makes it needless to install a current source or voltage source for each track, thereby promoting a small-size, lightweight and inexpensive construction.

Various modifications will become possible for those skilled in the art after receiving the teachings of the present disclosure without departing from the scope thereof. For example, the F/F group 62 shown in Fig. 8 may be combined with another such F/F group and so may be done each of the other associated circuits such as the variable voltage drive circuit. In that case, the two independent systems may be switched from one to the other by a high-speed switching element in order to secure a settling time of the power source circuit.

It will be noted that the common drive circuit 94 imposes no limitations on the recording circuit concerning circuit scale or any other factor, because it is an externally located control drive circuit separate from the switching element group 34, record head group 48, F/F group 62 and register group 78.

## Claims

1. A digital magnetic recording circuit for a recording and playback apparatus which records input digital signals into a plurality of tracks formed in a recording medium, comprising:

record head means (48) comprising a plurality of record heads (52—58);

switching means (34) comprising a plurality of switching elements (36—42, 36a—42a) which, respectively, are connected to the record heads (52—58) of said record head means (48) for selectively applying forward and reverse recording currents to the record heads (52—58) in response of the input digital signals;

current supply means (44) for supplying a constant current to each of the record heads (52—58), and

control means (78, 62) for selectively controlling the switching elements (36—42, 36a—42a) of said switching means (34) in response of a digital signal to be recorded on said tracks characterised by

said record heads (52—58) being commmonly connected at one end thereof;

a pair of switching elements (36, 36a; 38, 38a; 40, 40a; 42, 42a) of said switching means (34) being connected with one end of said switching elements to the other end of a respective one of the records heads (52—58), the constant current supply means (44) being adapted to selectively render a voltage supplied to said commonly connected one end of said record head (52—58) variable in response of a total current supplied to the record head means (48), and

the other end of one (36a, 38a, 40a, 42a) of each pair of switching elements being connected to ground whereas the other end of the other (36, 38, 40, 42) of each pair of switching elements being connected to a voltage source having the same polarity as the voltage at said commonly connected end of said record heads (52—58) but having a higher magnitude.

2. A digital magnetic recording circuit as claimed in claim 1, wherein said common drive means (44, 46) comprises a voltage programmer (46) for generating a control signal corresponding to the input digital signal, and a variable voltage drive circuit (44) for varying the voltage at the commonly connected one end of the record heads (52—58) in response to the control signal.

3. A digital magnetic recording circuit as claimed in claim 2, wherein the voltage programmer (46) comprises a source input terminal (46a), a data input terminal (46b—46e), an output terminal (46f), and a resistance switching circuit (R₇—R₁₁, T₁—T₄), for varying resistance between said source input terminal (46a) and said output terminal (46f) depending on the input digital signal applied to said data input terminal (46b—46e).

4. A digital magnetic recording circuit as claimed in claim 3, wherein the variable voltage drive circuit (44) comprises a source input terminal (44a), a control signal input terminal (44d), an output terminal (44b), and a variable voltage regulator (100) having terminals (V$_{IN}$, V$_{OUT}$, A$_{DJ}$), which respectively are connected to said source input terminal (44a), said control signal input terminal (44d), and said output terminal (44b).

5. A digital magnetic recording circuit as claimed in claim 2, wherein the voltage programmer (46) comprises a source input terminal (46a), a data input terminal (46b—46e), an output terminal (46f), and a digital-to-analog converter (110) connected to said source input terminal (46a), said data input terminal (46b—46e), and said output terminal (46f) for converting the input digital signal applied to said data input terminal (46b—46e) to an analog data signal.

6. A digital magnetic recording circuit as claimed in claim 5, wherein the variable voltage drive circuit (44) comprises a source input terminal (44a), a control signal input terminal (44d), an output terminal (44b), and an operational amplifier (112) having a non-inverting input to which the control signal is applied, an inverting input terminal to which an output of said operational amplifier (112) is applied and an output terminal connected to said output terminal (44b).

7. A digital magnetic recording circuit as claimed in claim 2, further comprising a compensation circuit (140) connected between the variable voltage drive circuit (44) and the commonly connected one end of the record heads (52—58) for maintaining the current fed to each of the record heads (52—58) constant.

8. A digital magnetic recording circuit as claimed in claim 7, wherein the compensation circuit (140) comprises a parallel connection of a resistor (R₁₈) and a capacitor (C₄).

9. A digital magnetic recording circuit as claimed in claim 1, wherein each of the switching elements (42, 42a) in the switching means (34) comprises two N-channel metal oxide semiconductor (MOS) transistors (120, 120a) which are operated by a single power source (+V$_{DD}$).

10. A digital magnetic recording circuit as claimed in claim 1, wherein each of the switching elements (42, 42a) in the switching means (34) comprises a single N-channel MOS transistor (130) and a single P-channel MOS transistor (130a) which are operated by positive and negative source voltages (+V$_{DD}$, −V$_{DD}$), respectively.

11. A digital magnetic recording circuit as claimed in claim 9 or 10, further comprising drive means (122, 128, 124) for driving the switching means (34) which comprises a level detector (124), for outputting the input digital signal, a level shifter (128) for converting a level of the input digital signal, and a complementary follower (122) for applying voltages of opposite phases to gates of the MOS transistors (120, 120a).

**Patentansprüche**

1. Digitaler Magnetaufzeichnungskreis für eine Aufzeichnungs- und Wiedergabevorrichtung, die eingegebene Digitalsignale in mehrere Spuren aufzeichnet, die in einem Aufzeichnungsmedium ausgebildet sind, enthaltend:
   eine Aufzeichnungskopfeinrichtung (48), die mehrere Aufzeichnungsköpfe (52—58) enthält;
   eine Schaltereinrichtung (34), die mehrere Schalterelemente (36—42, 36a—42a) enthält, die jeweils mit den Aufzeichnungsköpfen (52—58) der Aufzeichnungskopfeinrichtung (48) verbunden sind, um selektiv Vorwärts- und Rückwärtsaufzeichnungsströme den Aufzeichnungsköpfen (52—58) in Abhängigkeit von den eingebenen Digitalsignalen zuzuführen;
   eine Stromzuführungseinrichtung (44) zum Zuführen eines konstanten Stromes zu jedem der Aufzeichnungsköpfe (52—58), und
   eine Steuereinrichtung (78, 62) für die selektive Steuerung der Schalterelemente (36—42, 36a—42a) der Schaltereinrichtung (34) in Abhängigkeit von einem in den Spuren aufzuzeichnenden Digitalsignal, dadurch gekennzeichnet, daß die Aufzeichnungsköpfe (52—58) an einem Ende derselben miteinander verbunden sind;
   ein Paar der Schalterelemente (36, 36a; 38, 38a; 40, 40a; 42, 42a) der Schaltereinrichtung (34) am einen Ende der Schalterelemente mit dem anderen Ende eines jeweiligen Aufzeichnungskopfes (52—58) verbunden ist, die Konstantstromzuführungseinrichtung (44) dazu eingerichtet ist, selektiv eine Spannung, die den zusammengeschalteten Enden der Aufzeichnungsköpfe (52—58) zugeführt ist, in Abhängigkeit von einem der Aufzeichnungskopfeinrichtung (48) zugeführten Gesamtstrom variabel zu machen, und
   das andere Ende von einem Schalterelement (36a, 38a, 40a, 42a) eines jeden Paares der Schalterelemente mit Masse verbunden ist, während das andere Ende des anderen Schalterelements (36, 38, 40, 42) eines jeden Schalterelementpaares mit einer Spannungsquelle verbunden ist, die die gleiche Polarität wie die Spannung an dem zusammengeschalteten Ende der Aufzeichnungsköpfe (52—58) hat, jedoch eine größere Amplitude aufweist.

2. Digitaler Magnetaufzeichnungskreis nach Anspruch 1, bei dem die gemeinsame Antriebseinrichtung (44, 46) einen Spannungsprogrammierer (46) zum Erzeugen eines Steuersignals entsprechend dem eingegebenen Digitalsignal und eine variable Spannungstreiberschaltung (44) zum Variieren der Spannung an dem zusammengeschalteten Ende der Aufzeichnungsköpfe (52—58) in Abhängigkeit von dem Steuersignal aufweist.

3. Digitaler Magnetaufzeichnungskreis nach Anspruch 2, bei dem der Spannungsprogrammier (46) einen Quellen eingangsanschluß (46a), einen Dateneingangsanschluß (46b—46e), einen Ausgangsanschluß (46f) und einen Widerstandsschalterkreis ($R_7$—$R_{11}$, $T_1$—$T_4$) zum Variieren des Widerstandes zwischen dem Quelleneingangsanschluß (46a) und dem Ausgangsanschluß (46f) in Abhängigkeit von dem dem Dateneingangsanschluß (46b—46e) zugeführten Eingangsdatensignal enthält.

4. Digitaler Magnetaufzeichungskreis nach Anspruch 3, bei dem die variable Spannungstreiberschaltung (44) einen Quelleneingangsanschluß (44a), einen Steuersignaleingangsanschluß (44d), eihen Ausgangsanschluß (44b) und einen variablen Spannungsregler (100) aufweist, der Anschlüsse ($V_{IN}$, $V_{OUT}$, ADJ) aufweist, die mit dem Quelleneingangsanschluß (44a), dem Steuersignaleingangsanschluß (44d) bzw. dem Ausgangsanschluß (44b) verbunden sind.

5. Digital Magnetaufzeichnungskreis nach Anspruch 2, bei dem der Spannungsprogrammierer (46) einen Quelleneingangsanschluß (46a), einen Dateneingangsanschluß (46b—46e), einen Ausgangsanschluß (46f) und einen Digital/Analog-Wandler (110) aufweist, der mit dem Quelleneingangsanschluß (46a), dem Dateneingangsanschluß (46b—46e) und ·dem Ausgangsanschluß (46f) verbunden ist, um das eingegebene Digitalsignal, das dem Dateneingangsanschluß (46b—46e) zugeführt ist, in ein analoges Datensignal umzuwandeln.

6. Digitaler Magnetaufzeichnungskreis nach Anspruch 5, bei dem die variable Spannungstreiberschaltung (44) einen Quelleneingangsanschluß (44a), einen Steuersignaleingangsanschluß (44d), einen Ausgangsanschluß (44b) und einen Operationsverstärker (112) aufweist, der einen nicht invertierenden Eingang, dem das Steuersignal zugeführt ist, einen invertierenden Eingangsanschluß, dem ein Ausgang des Operationsverstärkers (112) zugeführt ist, und einen Ausgangsanschluß, der mit dem genannten Ausgangsanschluß (44b) verbunden ist, aufweist.

7. Digitaler Magnetaufzeichnungskreis nach Anspruch 2, weiterhin enthaltend eine Kompensationsschaltung (140), die zwischen die variable Spannungstreiberschaltung (44) und das zusammengeschaltete Ende der Aufzeichnungsköpfe (52—58) geschaltet ist, um den Strom, der jedem der Aufzeichnungsköpfe (52—58) zugeführt ist, konstant zu halten.

8. Digitaler Magnetaufzeichnungskreis nach Anspruch 7, bei dem die Kompensationsschaltung (140) eine Parallelschaltung aus einem Widerstand ($R_{18}$) und einem Kondensator ($C_4$) enthält.

9. Digitaler Magnetaufzeichnungskreis nach Anspruch 1, bei dem jedes der Schalterelemente (42, 42a) in der Schaltereinrichtung (34) zwei N-Kanal-Metalloxidhalbleiter-(MOS)-Transistoren (120, 120a) enthält, die durch eine einzige Stromquelle (+$V_{DD}$) betrieben werden.

10. Digitaler Magnetaufzeichnungskreis nach Anspruch 1, bei dem jedes der Schalterelemente (42, 42a) in der Schaltereinrichtung (34) einen einzigen N-Kanal-MOS-Transistor (130) und einen einzigen P-Kanal-MOS-Transistor (130a) enthält, die durch positive bzw. negative Versorgungsspannungen (+$V_{DD}$, −$V_{DD}$) betrieben werden.

11. Digitaler Magnetaufzeichnungskreis nach Anspruch 9 oder 10, weiterhin enthaltend eine Treibereinrichtung (122, 128, 124) zum Treiben der Schaltereinrichtung (34), enthaltend einen Pegeldetektor (124) zum Abgeben des eingegebenen Digitalsignals, einen Pegelschieber (128) zum Umwandeln eines Pegels des eingegebenen Digitalsignals, und einen Komplementärfolger (122) zum Anlegen von Spannungen entgegengesetzter Phasen an die Gates der MOS-Transistoren (120, 120a).

**Revendications**

1. Circuit d'enregistrement magnétique numérique pour dispositif d'enregistrement et de lecture qui enregistre des signaux numériques d'entrée sur un ensemble de pistes formées dans un support d'enregistrement, comprenant:

un moyen à têtes d'enregistrement (48) comprenant un ensemble de têtes d'enregistrement (52—58);

un. moyen de commutation (34) comprenant un ensemble d'éléments commutateurs (36—42, 36a—42a) qui sont respectivement connectés aux têtes d'enregistrement (52—58) du moyen à têtes d'enregistrement (48) pour appliquer sélectivement des courants d'enregistrement directs et inverses aux têtes d'enregistrement (52—58) en réponse aux signaux numériques d'entrée;

un moyen de fourniture de courant (44) pour fournir un courant constant à chacune des têtes d'enregistrement (52—58), et

un moyen de commande (78, 62) pour commander sélectivement les éléments commutateurs (36—42, 36a—42a) du moyen de commutation (34) en réponse à un signal numérique à enregistrer sur les pistes, caractérisé par

les têtes d'enregistrement (52—58) qui sont connectées en commun par une de leurs extrémités;

une paire d'éléments commutateurs (36, 36a; 38, 38a; 40, 40a; 42, 42a) du moyen de commutation (34) connectés par une extrémité des éléments commutateurs à l'autre extrémité d'une tête respective des têtes d'enregistrement (52—58), le moyen de fourniture de courant constant (44) étant agencé pour rendre sélectivement variable la tension fournie aux extrémités connectées en commun des têtes d'enregistrement (52—58) en réponse à un courant total fourni au moyen à têtes d'enregistrement (48), et

l'autre extrémité d'un élément (36a, 38a, 40a, 42a) de chaque paire d'éléments commutateurs qui est connectée à la masse, alors que l'autre extrémité de l'autre élément (36, 38, 40, 42) de chaque paire d'éléments commutateurs est connectée à une source de tension ayant la même polarité que la tension aux extrémités connectées en commun des têtes d'enregistrement (52—58) mais ayant une amplitude supérieure.

2. Circuit d'enregistrement magnétique numérique selon la revendication 1, dans lequel le moyen de fourniture de courant (44, 46) comprend un programmateur de tension (46) pour engendrer un signal de commande correspondant au signal numérique d'entrée, et un circuit de fourniture de tension variable (44) pour faire varier la tension aux extrémités connectées en commun des têtes d'enregistrement (52—58) en réponse au signal de commande.

3. Circuit d'enregistrement magnétique numérique selon la revendication 2, dans lequel le programmateur de tension (46) comprend une borne d'entrée de source (46a), une borne d'entrée de données (46b—46e), une borne de sortie (46f), et un circuit de changement de résistance ($R_7$—$R_{11}$, $T_1$—$T_4$) pour faire varier la résistance entre la borne d'entrée de source (46a) et la borne de sortie (46f) selon le signal numérique d'entrée appliqué à la borne d'entrée de données (46b—46e).

4. Circuit d'enregistrement magnétique numérique selon la revendication 3, dans lequel le circuit de fourniture de tension variable (44) comprend une borne d'entrée de source (44a), une borne d'entrée de signaux de commande (44d), une borne de sortie (44b), et un régulateur de tension variable (100) comportant des bornes ($V_{IN}$, $V_{OUT}$, $A_{DJ}$) qui sont respectivement connectées à la borne d'entrée de source (44a), à la borne d'entrée de signaux de commande (44d), et à la borne de sortie (44b).

5. Circuit d'enregistrement magnétique numérique selon la revendication 2, dans lequel le programmateur de tension (46) comprend une borne d'entrée de source (46a), une borne d'entrée de données (46b—46e), une borne de sortie (46f), et un convertisseur numérique-analogique (110) connectée à la borne d'entrée de source (46a), à la borne d'entrée de données (46b—46e) et à la borne de sortie (46f) pour convertir le signal numérique d'entrée appliqué à la borne d'entrée de données (46b—46e) en un signal de données analogique.

6. Circuit d'enregistrement magnétiques numérique selon la revendication 5, dans lequel le circuit de fourniture de tension variable (44) comprend une borne d'entrée de source (44a), une borne d'entré de signaux de commande (44d), une borne de sortie (44b), et un amplificateur opérationnel (112) ayant une entrée de non-inversion à laquelle est appliqué le signal de commande, une borne d'entrée d'inversion à laquelle est appliqué le signal de sortie de l'amplificateur opérationnel (112), et une borne de sortie connectée à la borne de sortie (44b).

7. Circuit d'enregistrement magnétique numérique selon la revendication 2, comprenant en outre un circuit de compensation (140) connecté entre le circuit de fourniture de tension variable (44) et les extrémités connectées en commun des têtes d'enregistrement (52—58) pour maintenir constant le courant fourni à chacune des têtes d'enregistrement (52—58).

8. Circuit d'enregistrement magnétique numérique selon la revendication 7, dans lequel le circuit de compensation (140) comprend une connexion parallèle d'une résistance ($R_{18}$) et d'un condensateur ($C_4$).

9. Circuit d'enregistrement magnétique numérique selon la revendication 1, dans lequel chacun des éléments commutateurs (42, 42a) inclus dans le moyen de commutation (34) comprend deux transistors à métal-oxyde-semiconducteur à canal N (120, 120a) qui sont rendus actifs par une seule source d'alimentation ($+V_{DD}$).

10. Circuit d'enregistrement magnétique numérique selon la revendication 1, dans lequel chacun des éléments commutateurs (42, 42a) inclus dans le moyen de commutation (34) comprend un seul transistor à métal-oxyde-semiconducteur MOS ù canal N (130) et un seul transistor MOS à canal P (130a) qui sont rendus actifs respectivement par des tensions de source positive et négative ($+V_{DD}$, $-V_{DD}$).

11. Circuit d'enregistrement magnétique numérique selon l'une quelconque des revendications 9 ou 10, comprenant en outre un moyen de commande (122, 128, 124) pour commander le moyen de commutation (34) qui comprend un détecteur de niveau (124) pour engendrer en sortie le signal numérique d'entrée, un circuit décaleur de niveau (128) pour convertir le niveau du signal numérique d'entrée, et un circuit suiveur complémentaire (122) pour appliquer des tensions de phases opposées aux grilles des transistors MOS (120, 120a).

# Fig. I

# Fig. 2

EP 0 161 496 B1

*Fig. 3*

*Fig. 4*

2

*Fig. 5*

*Fig. 6*

# Fig. 7

+1 [V]

$S_{1a}$

$M_1$

$G_1$

$S_{1b}$

$\overrightarrow{1[A]}$

$S_{2a}$

$M_2$

$G_2$

$S_{2b}$

$\overrightarrow{1[A]}$

−1 [V]

$F_1$

$F_2$

$F_3$

O

1

| S / P REGISTER | S / P REGISTER | S / P REGISTER |
|---|---|---|

$X_1$

$X_2$

$X_3$

4

# Fig. 8

Fig.9A SD

Fig.9B CK

Fig.9C LK

Fig.9D AND 82

Fig.9E S/P REGISTER 80

Fig.9F S/P REGISTER 86

Fig.9G S/P REGISTER 88

Fig.9H S/P REGISTER 90

Fig.9I F/F 64

Fig.9J F/F 66

Fig.9K F/F 68

Fig.9L F/F 70

Fig.9M C

+Vcc

−Vcc

6

## Fig. 10

# Fig. 11

# Fig. 12

## Fig. 13

# Fig. 14

# Fig. 15

## Fig. 16 A

## Fig. 16 B